Europäisches Patentamt

European Patent Office

Office européen des brevets

(11) Veröffentlichungsnummer: **0 600 164 A1**

# EUROPÄISCHE PATENTANMELDUNG

(21) Anmeldenummer: 93113875.4

(22) Anmeldetag: 31.08.93

(51) Int. Cl.5: **H04R 3/02**

(30) Priorität: **08.09.92 DE 4229912**

(43) Veröffentlichungstag der Anmeldung:
**08.06.94 Patentblatt 94/23**

(84) Benannte Vertragsstaaten:
**AT BE CH DE ES FR GB IT LI NL SE**

(71) Anmelder: **Alcatel SEL Aktiengesellschaft**
**Lorenzstrasse 10**
**D-70435 Stuttgart(DE)**

(72) Erfinder: **Walker, Michael**

Ringstrasse 35
**D-73666 Baltmannsweiler(DE)**
Erfinder: **Heitkämper, Peter**
**Kirchplatz 3**
**D-64846 Gross-Zimmern(DE)**

(74) Vertreter: **Knecht, Ulrich Karl et al**
**Alcatel SEL AG,**
**Patent- und Lizenzwesen,**
**Postfach 30 09 29**
**D-70449 Stuttgart (DE)**

(54) **Verfahren zum Verbessern der Übertragungseingenschaften einer elektroakustischen Anlage.**

(57) Bei einem Telefon mit einer Freisprecheinrichtung und Kompandersteuerung erfolgt die Einstellung der Kennlinie ($LU2 = f(LU1)$) des Kompanders so, daß eine einwandfreie Funktion bei üblichen Systemparametern gewährleistet ist. Treten sehr hohe Sprach-, Wiedergabe- oder Geräuschpegel auf, dann kommt es zu Fehlsteuerungen. Durch Ableitung eines getrennten Sprach- und Geräuschpegels aus dem Sendesignal und einer darauf ermittelten Steuergröße erfolgt eine zusätzliche Kennliniensteuerung bei stark abweichenden höheren Pegeln der genannten Art. Die Sprachverständlichkeit ist dadurch auch bei den hohen Pegeln noch gewährleistet.

FIG.2

Die vorliegende Erfindung bezieht sich auf ein Verfahren zum Verbessern der Übertragungseigenschaften einer mit einer adaptiven Dynamiksteuerung versehenen elektroakustischen Anlage gemäß dem Oberbegriff des Anspruchs 1.

Ein derartiges Verfahren ist aus der DE - A 37 24 346 bekannt. Durch den Kompander werden die vom Mikrophon gelieferten Signale, im folgenden Sendesignale genannt, soweit sie über einem Sollwert liegen, auf einen einheitlichen Signalpegel komprimiert, soweit sie den Sollwert aufweisen, maximal verstärkt, und soweit sie unter dem Sollwert liegen, expandiert. Die Kompander-Kennlinie LU2 = f(LU1) besitzt einen steilen Expansionsbereich und einen flachen Kompressionsbereich. Durch Rückführung der Ausgangssignale über einen Tiefpaß oder ein Bandfilter zum Eingang des Kompanders kann die Kennlinie verschoben und gegebenenfalls auch die Kennliniensteilheit im Expanderbereich verändert werden. Außerdem kann die Kennlinienverschiebung in Abhängigkeit von der Lautstärkeeinstellung im Empfangszweig bewirkt werden. Die Systemparameter werden in der Regel herstellerseitig auf übliche, akustische Umgebungsverhältnisse in einem Büroraum eingestellt.

Liegen davon abweichende Verhältnisse vor, z.B. sehr hoher Geräuschpegel, so muß ein manueller Abgleich vorgenommen werden, da beim Ansteigen der Umgebungsgeräusche über den Einsatzpunkt der Expansion diese mit erhöhter Verstärkung übertragen werden.

Mit der vorliegenden Erfindung soll die Aufgabe gelöst werden, das bekannte Verfahren bzw. eine dafür geeignete Anlage so weiterzubilden, daß sowohl bei Anhebung der Besprechungslautstärke als auch bei zunehmendem Umgebungsgeräusch eine gute Verständigung erreicht wird, ohne daß der Teilnehmer besondere Maßnahmen treffen muß.

Gelöst wird diese Aufgabe durch die im Anspruch 1 angegebenen Merkmale.

Durch diese aus dem Sendesignal abgeleitete Spracherkennung und Geräuscherkennung, der besonderen Art der Spracherkennung sowie der Steuerung sowohl des Kompanders als auch der Empfangslautstärke mittels der aus der Sprach- und Geräuscherkennung erzeugten Steuergrößen wird erreicht, daß die zu übertragende Sprache über dem Sollwert immer mit konstantem Pegel gesendet wird, mit zunehmendem Umgebungsgeräusch die Empfangslautstärke angehoben, der Geräuschpegel jedoch durch die Expanderfunktion abgesenkt wird, ohne daß irgendwelche manuelle Eingriffe in den Verfahrensablauf oder in der Anlage vorgenommen werden müssen.

Zwar ist es bereits z.B. aus der DE-OS 24 56 468 bekannt, zum Verbessern der Verständlichkeit einer elektroakustischen Tonwidergabe, bei der Umgebungsgeräusche auftreten, einen Störgeräusche feststellenden, zusätzlichen Detektor vorzusehen und mit zunehmendem Geräuschpegel die Wiedergabeschallstärke zu erhöhen. Es erfolgt aber kein Absenken der Störgeräusche und keine Erzeugung einer Steuerkomponente aus Sprach- und Störsignalen des Sendezweiges. Es findet jedoch eine störsignalabhängige und frequenzabhängige Nutzsignalkompression statt, um bei der Wiedergabe der Differenz zwischen lauten und leisen Stellen zu vermindern.

Weitere vorteilhafte Einzelheiten der Erfindung sind in den Unteransprüchen angegeben und nachfolgend anhand der in der Zeichnung veranschaulichten Ausführungsbeispiele beschrieben.

Es zeigen:

| Fig. 1 | ein Blockschaltbild eines Freisprechprinzips eines Telekommunikations-Endgerätes mit adaptiver Dynamiksteuerung, |
| --- | --- |
| Fig. 2 | ein erweitertes Blockschaltbild, |
| Fig. 3 und 4 | je ein Flußdiagramm der Arbeitsweise einer Kompandersteuerung, |
| Fig. 5 | den zeitlichen Verlauf des Sendesignals am Kompanderausgang, |
| Fig. 6 | ein Kennlinienfeld einer möglichen Kennlinienform, |
| Fig. 7 und 8 | den prinzipiellen Aufbau eines Sprachdetektors bzw. eines Geräuschdetektors mit graphischer Darstellung der Filterkurve und der Zeitkonstante derselben, |
| Fig. 9 | einen Prinzip-Schaltplan eines Telekommunikations-Endgerätes mit der erfindungsgemäßen Erweiterung, |
| Fig. 10 | ein weiteres Blockschaltbild des Eingangsteils, z.B. eines Endgerätes und |
| Fig. 11 | ein dazu mögliches Kennlinienfeld. |

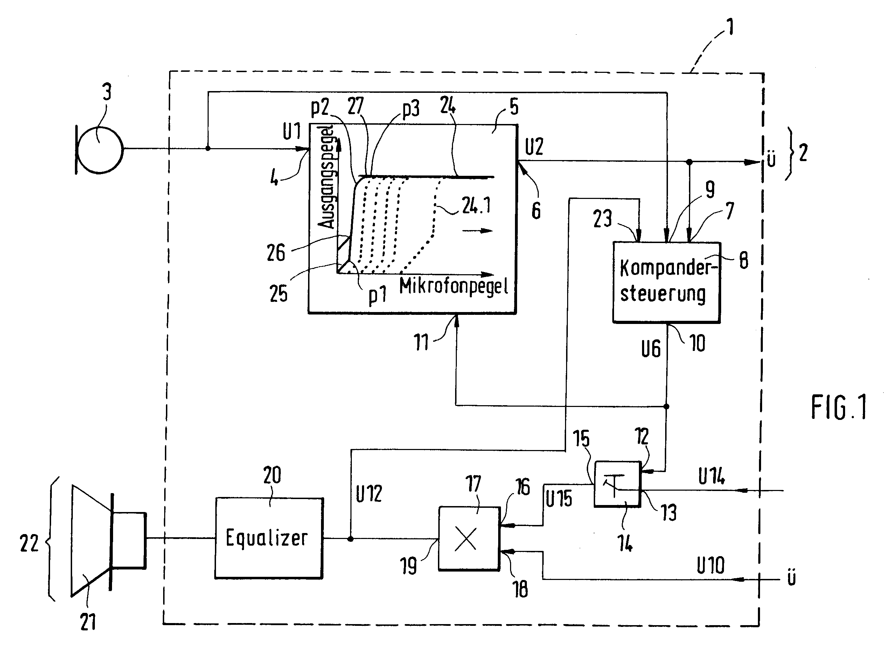

In dem Blockschaltbild der Fig. 1 ist mit 1 eine elektroakustische Anlage in Form eines Kommunikations-Endgerätes mit einer Freisprecheinrichtung bezeichnet. Sie besitzt einen Sendezweig 2 mit einem Mikrophon 3, dessen Sendesignal U1 am Eingang 4 eines einem Verstärker, einen Kompressor und einen Expander aufweisenden Kompanders 5 anliegt. Vom Ausgang 6 des Kompanders 5 ist das modifizierte Sendesignal U2 zu einer Übertragungsleitung geführt. Außerdem liegt es an dem einen Eingang 7 einer Kompandersteuerung 8. An einen zweiten Eingang 9 derselben liegt das Sendesignal U1. Der Ausgang 10 der Kompandersteuerung 8 ist mit dem Steuereingang 11 des Kompanders 5 und außerdem mit dem einen Eingang 12 von zwei Eingängen 12 und 13 eines steuerbaren Dämpfungsgliedes 14 verbunden. Am Eingang 13 liegt eine über einen Lautstärkesteller einstellbare Steuerspannung U14.

Die am Ausgang 15 des Dämpfungsgliedes 14 ausgegebene Spannung U15 wird dem einen Eingang 16 eines Verstärkers und Multiplizierers 17 zugeführt, an dessen anderem Eingang 18 ein Empfangssignal U10 anliegt. Das vom Multiplizierer 17 am Ausgang 19 ausgegebene verstärkte Empfangssignal U12 gelangt über einen Equalizer 20 an einen Lautsprecher 21 des Empfangszweiges 22. Das Empfangssignal U12 wird einem dritten Eingang 23 der Kompandersteuerung 8 zugeführt. Die Wirkungsweise des Kompanders entspricht dem in der DE-OS 37 24 346 zu entnehmenden Prinzip. Beim Inbetriebsetzen des Endgerätes 1 stellt sich, wenn weder ein Sendesignal U1 noch ein Empfangssignal U12 vorhanden ist, eine Kennlinie 24 des Expanders ein, die einen Anfangsbereich 25 konstanter Verstärkung, einen beim Punkt p1 beginnenden und sich bis zu p2 erstreckenden steilen Expansionsbereich 26, einen anschließenden, von p2 bis p3 reichenden Kompressionsbereich 27 und einen anschließend etwa konstanten Kompressionspegel besitzt. Diese Kennlinie ist in Fig. 1 innerhalb des Kompanderblockes 5 als durchgezogene Linie dargestellt.

Tritt ein Sendesignal U1 mit ausreichend hohem Pegel auf, so wird dies auf eine konstante Lautstärke komprimiert, da der Kompander 5 im Kompressionsbereich arbeitet. Das ausgegebene, komprimierte Sendesignal U2 wird in der Kompandersteuerung 8 in eine Sprachkomponente und eine Geräuschkomponente aufgeteilt. Aus der Sprachkomponente wird der Spitzenwert detektiert und ein diesem entsprechender Sprachpegel und daraus ein Sprachpegel-Steuersignal erzeugt oder berechnet.

Aus der Geräuschkomponente wird der Geräuschpegel ermittelt und ein diesem entsprechendes Geräuschpegel-Steuersignal erzeugt oder berechnet. Dieses wird zu dem Sprachpegel-Steuersignal addiert und als Steuersignal U6 dem Kompander 5 zur Steuerung der Kennlinie LU2 = f(LU1) zugeführt. Mit größer werdendem Steuersignal U6 wird die Kennlinie in der Zeichnung nach rechts verschoben, was durch die gestrichelten Kennlinien angedeutet ist. Die Verschiebung der Kennlinie erfolgt erfindungsgemäß derart, daß der ermittelte Geräuschpegel immer unterhalb des Einsatzpunktes p1 des Expansionsbereiches 26 liegt. Dies geschieht z.B. dadurch, daß die Sprach- und Geräuschpegel mit entsprechend gewählten Gewichtungsfaktoren multipliziert werden.

Durch die Verschiebung der Kennlinie nach rechts wird die maximale Empfindlichkeit abgesenkt - Verschiebung des Punktes p3 nach rechts - und größere Geräuschpegel werden durch den mitverschobenen Expanderbereich weiterhin abgeschwächt. Gleichzeitig wird das Steuersignal U6 dem Dämpfungsglied 14 zugeführt und die Verstärkung im Empfangszweig 22, entsprechend einer erhöhten Dämpfung im Sendezweig 2 infolge Kennlinienverschiebung nach rechts, erhöht. Der maximale Grad der Verstärkung ist abhängig von der vorhandenen akustischen Kopplung zwischen Lautsprecher 21 und Mikrophon 3.

Beim Auftreten eines Empfangssignals U10 wird dieses über den Multiplexer 17 verstärkt dem Lautsprecher 21 zugeführt. Zugleich gelangt es an den Eingang 23 der Kompandersteuerung. Hier wird festgestellt, ob der Empfangspegel größer oder kleiner ist als ein vorgegebener Schwellenwert. Ist er kleiner, so wird die Kompandersteuerung fortgesetzt und das Empfangssignal U12 entsprechend dem Steuersignal U6 verändert.

Ist der Empfangspegel größer als der Schwellenwert, so wird die Kompandersteuerung angehalten und die Kompandersteuerung mit dem gerade vorhandenen Steuersignal U6 so lange betrieben, bis das Empfangssignal U12 unter den Schwellenwert abfällt.

Hierdurch wird also eine gegenseitige Beeinflussung von Empfangs- und Sendesignal vermieden und die Sprachverständigung und damit die Freisprecheigenschaft des Endgerätes 1 deutlich verbessert.

Eine weitere Verbesserung kann durch Zuführen der Sendesignal-Eingangsspannung U1 an die Kompandersteuerung 8 erfolgen. Hierdurch können plötzlich starke Signaländerungen schneller ausgeregelt werden.

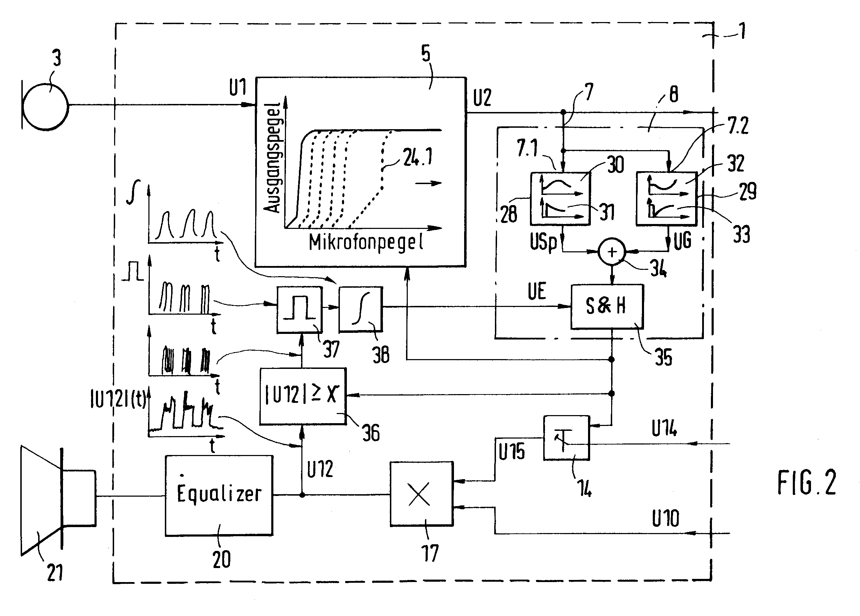

In Fig. 2 ist ein Schaltungsprinzip zur Durchführung des vorgenannten Verfahrensablaufs dargestellt. Die Kompandersteuerung 8 besitzt einen Sprachdetektor 28 mit einem Eingang 7.1 und einen Geräuschdetektor 29 mit einem Eingang 7.2. Beiden Eingängen 7.1 und 7.2 wird die Kompander-Ausgangsspannung - Sendesignal U2 - zugeführt.

Der Sprachdetektor 28 enthält ein Sprachfrequenzfilter, das durch die Filterkurve 30 dargestellt ist. Zweckmäßig ist das Sprachfrequenzfilter derart ausgelegt, daß es vor allem auf die im Sprachfrequenzspektrum am stärksten auftretenden Frequenzen anspricht. Außerdem ist es so ausgelegt, daß es eine sehr kurze Anstiegszeitkonstante, beispielsweise 1 ms bis 100 ms, und eine lange Abfallzeitkonstante, beispielsweise 200 ms bis 5 s, besitzt, wie anhand des Diagramms 31 veranschaulicht. Hierdurch ist gewährleistet, daß im wesentlichen nur Sprachsignale detektiert werden und ein dem Sprachpegel entsprechendes Sprachpegel-Steuersignal USp vom Burst und dem Spitzenwert des Sendesignals abgeleitet oder berechnet wird.

Der Geräuschdetektor 29 besitzt vorzugsweise ein Geräuschfilter, dessen Filterkurve 32 wenigstens annähernd entgegengesetzt zur Sprachfrequenz-Filterkurve 30 verläuft. Hierdurch wird eine weiter verbesserte Entscheidung und Trennung zwischen Sprach- und Geräuschsignalen erreicht. Außerdem ist das Geräuschfilter so ausgelegt, daß es eine lange Anstiegszeitkonstante, beispielsweise 200 ms bis 5 s, und eine kurze Abfallzeitkonstante, beispielsweise 1 ms bis 100 ms, besitzt, so daß das Ansprechen auf in der Regel längere Zeit mit relativ konstantem Pegel auftretende Geräusche verbessert wird (Diagramm 33 in Fig. 2). Entsprechend der ermittelten Pegel wird ein Geräuschpegel-Steuersignal UG erhalten oder berechnet.

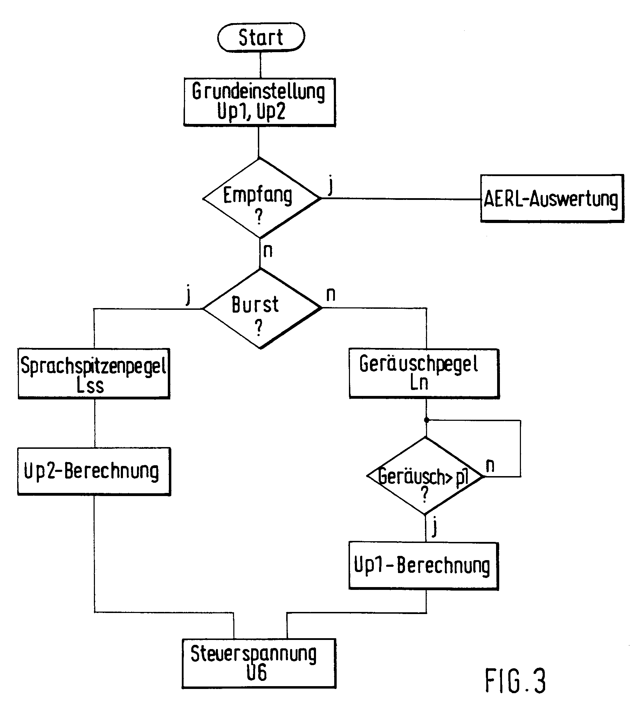

Die Sprachpegel- und Geräuschpegel-Steuersignale USp und UG werden, nach entsprechender Gewichtung, einem Addierer 34 zugeführt, der das Steuersignal U6 an ein Sample-und-Hold-Glied 35 ausgibt. Dieses wird über den Schwellenwertdetektor 36, einem diesen nachgeschalteten Pulsformer 37 und ein folgendes Integrierglied 38 von dem aus dem Empfangssignal U12 abgeleiteten Steuersignal UE angesteuert. Als Impulsformer 37 wird zur Zeitdehnung zweckmäßigerweise eine monolithische Kippstufe verwendet. Das Sample- und Hold-Glied 35 hält den Momentanwert des Pegels des Steuersignals U6 fest, wenn entsprechend dem den Schwellenwert x übersteigenden Empfangspegel das Steuersignal U6 generiert wird. Somit wird der Empfangspegel-Schwellenwert x entsprechend dem Steuersignal U6 verändert oder ist veränderbar. Der Empfangspegel-Schwellenwert x wird in Abhängigkeit von der Rückhördämpfung eingestellt. Die Fig. 3 zeigt beispielhaft das Ablaufdiagramm des Verfahrens. Nach dem Start erfolgt die Grundeinstellung der Kennlinie LU2 = f(LU1) mit den Punkten p1 und p2 entsprechend den ermittelten Werten Up1 und Up2. Anschließend wird festgestellt, ob ein Empfangssignal U10 vorhanden ist. Wenn es festgestellt wird, erfolgt die Steuerung der Rückhördämpfung. Wird kein Empfangssignal festgestellt, dann wird ermittelt, ob im Sendesignal ein Burst auftritt. Falls dieser auftritt, wird vom Sprachdetektor der Spitzenwert festgestellt und zur Berechnung des Punktes p2 des Kompressionsbereiches 27 verwendet und der ermittelte oder berechnete Wert zur Bildung der Steuerspannung U6 verwendet.

Ist kein Burst festgestellt worden, so ist anzunehmen, daß es sich um Geräusche handelt. Der Geräuschdetektor 29 ermittelt den Geräuschpegel. Anschließend wird festgestellt, ob dieser größer ist als der dem jeweiligen Einsatzpunkt p1 des Expansionsbereiches 26 entsprechende Wert und bei festgestelltem größeren Wert der dem Punkt p1 entsprechende Steuerwert Up1 ermittelt oder berechnet und ebenfalls zur Bildung der Steuerspannung U6 verwendet.

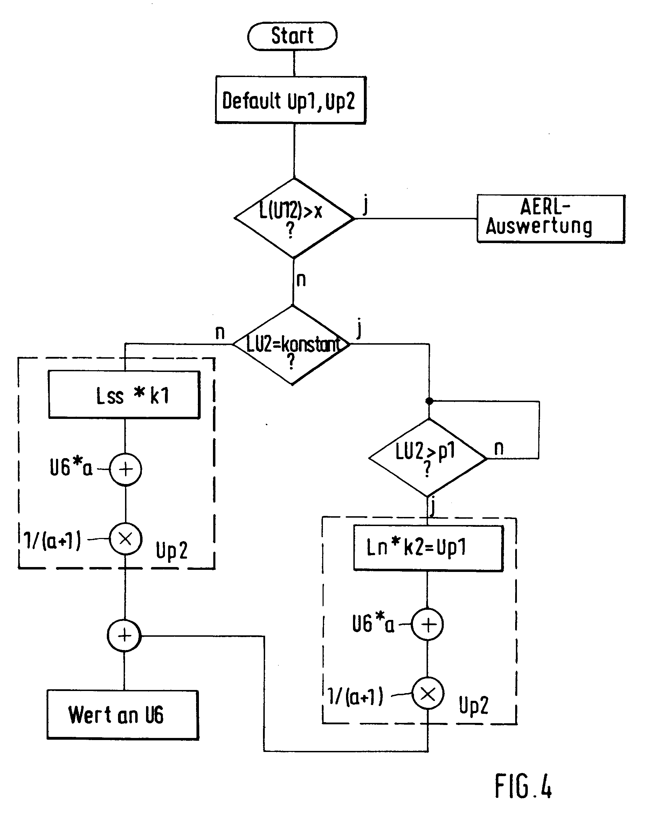

Das in Fig. 4 dargestellte Ablaufdiagramm zeigt im Spracherkennungszweig die Gewichtung des Sprachspitzenwertes mit einem Gewichtungsfaktor k1, und im Geräuscherkennungszweig die Gewichtung des dem Geräuschpegel entsprechenden Wertes mit einem Gewichtungsfaktor k2. Weiterhin wird bei der Spracherkennung und der Geräuscherkennung der entsprechende Steuersignalwert aus dem Momentanwert, dem vorher vorhanden gewesenen Wert U6* . a und Multiplikation mit dem Faktor 1 / (a + 1) gemittelt und zur Bildung des Steuersignals U6 herangezogen. Hierdurch wird die Kontinuität des Steuerverlaufs verbessert.

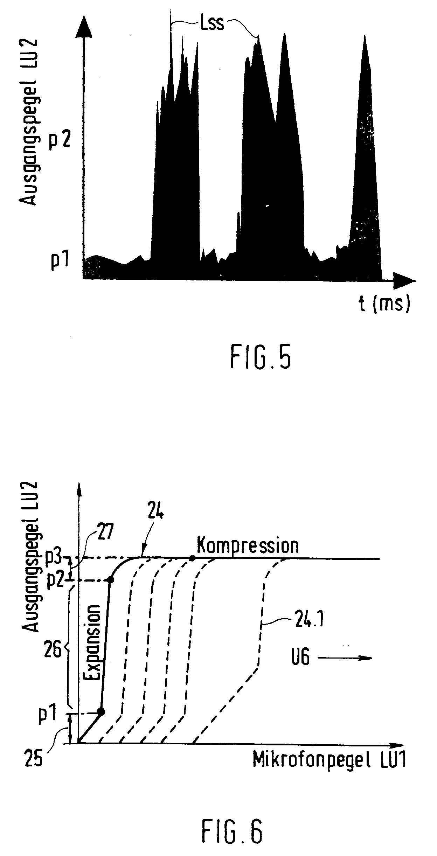

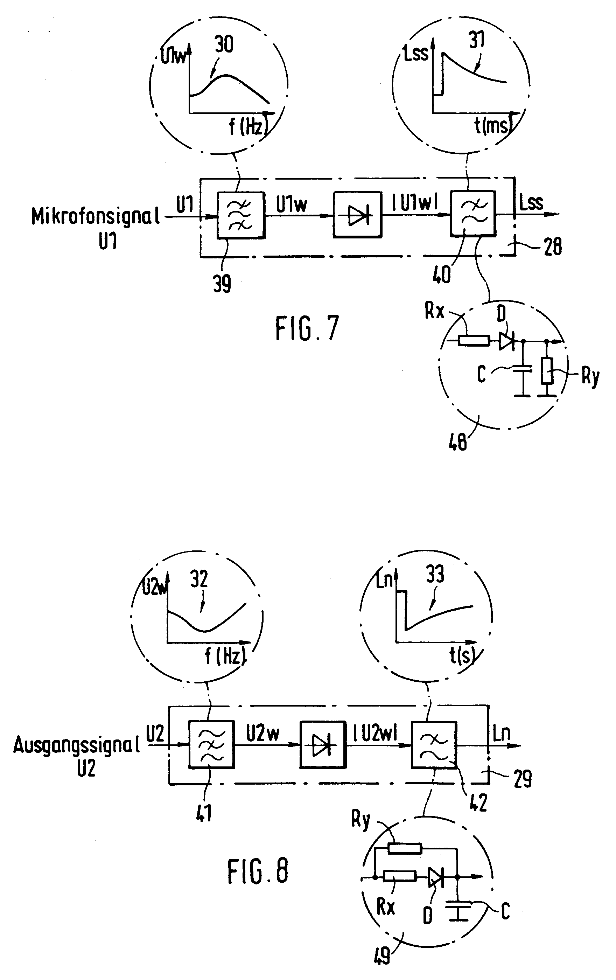

In Fig. 5 ist der Verlauf des Ausgangspegels LU2 in Abhängigkeit von der Zeit dargestellt und die Werte für die Punkte p1, also Beginn des Expansionsbereiches 26 sowie p2, also Ende des Expansionsbereiches und Beginn des Kompressionsbereiches 27, angegeben. Die Fig. 6 zeigt das hierzu mögliche Kennlinienfeld.

Fig. 7 zeigt den prinzipiellen Aufbau eines Sprachdetektors 28 mit einem Bandpaß 39 als Sprachfilter, das die darüber abgebildete Filterkurve 30 und der verwendete Tiefpaß 40 die im Diagramm 31 dargestellte Funktion der Anstiegs- und Abfallzeit besitzt. Die Filterkurve 30 zeigt, daß der Bandpaß 39 als Sprachfilter bevorzugt die im Sprachspektrum am stärksten auftretenden Frequenzen überträgt. Die im Diagramm 31 gezeigte Zeitfunktion kann durch den darunter dargestellten Schaltungsaufbau aus dem Kondensator C, dem mit der Diode D in Reihe liegenden Widerstand $R_x$ und den Widerstand $R_y$ realisiert werden, wobei die Reihenschaltung aus $R_x$ und D am Hochpunkt der Parallelschaltung aus $R_y$ und C angeschlossen ist.

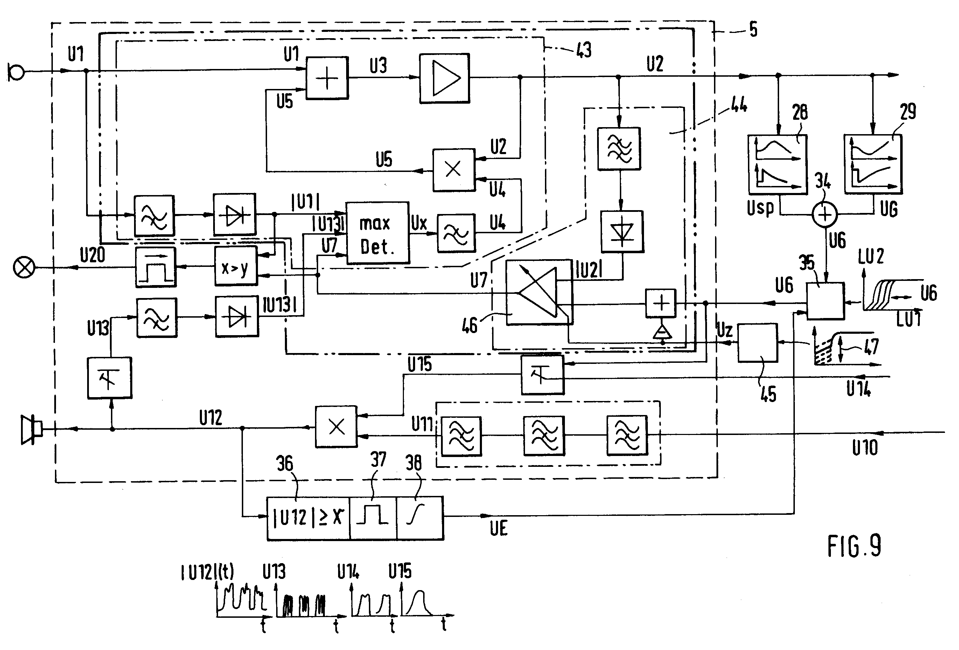

Den prinzipiellen Aufbau eines Geräuschdetektors 29 zeigt die Fig. 8. Dessen Bandfilter 41 ist so ausgelegt, daß es die entgegengesetzt zur Sprachdetektor-Filterkurve 30 liegende Filterkurve 32 besitzt. Der ausgangsseitige Tiefpaß 42 ist so ausgelegt, daß eine Kurve 33 mit langer Anstiegs- und kurzer Abfallzeitkonstante erhalten wird, was durch den darunter dargestellten Schaltungsaufbau mit dem am Hochpunkt des Kondensators C angeschlossenen Parallelzweig aus der Reihenschaltung eines Widerstandes $R_x$ mit einer Didode D und dem parallel dazu liegenden Widerstand $R_y$ realisierbar ist.

Das Prinzipschaltbild der Fig. 9 zeigt den Aufbau eines Kompanders 5 mit einem Kompressorteil 43 und einem Expanderteil 44 und einer vom Empfangssignal U12 abgeleiteten Steuerspannung U13 zur Steuerung der Rückhördämpfung. Die erfindungsgemäße Kompandersteuerung erfolgt durch die zusätzliche Verwendung der bereits anhand der Fig. 2 beschriebenen Sprach- und Geräuschdetektoren 28, 29, das Sample-und-Hold-Glied 35 und den Schwellenwertdetektor 36 mit Pulsformer 37 und Integrator 38.

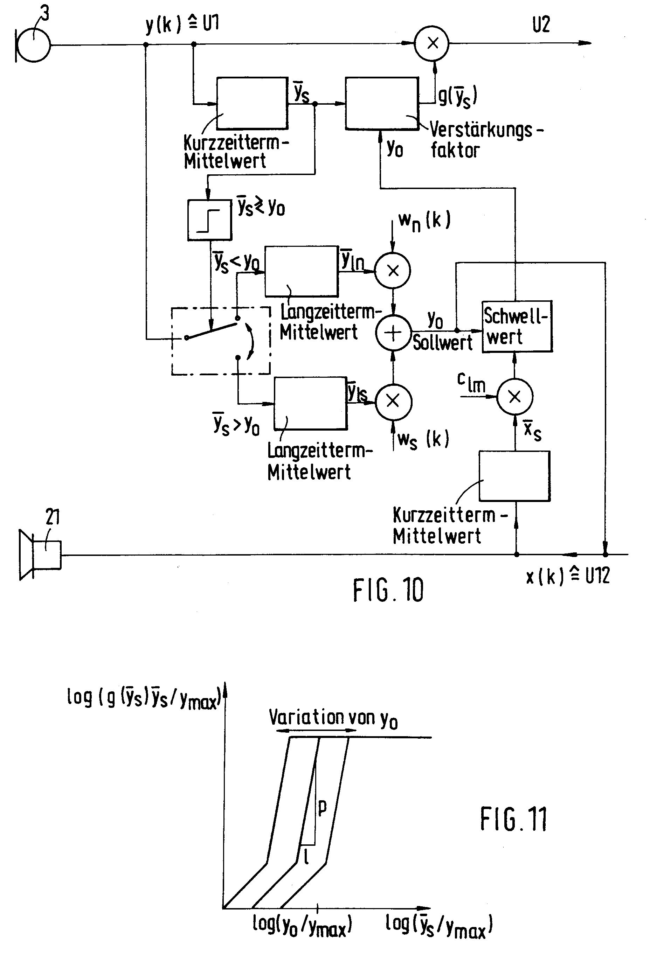

Bei den bisher beschriebenen Ausführungsbeispielen erfolgt die Abzweigung des Sendesignals zum Sprach- und Geräuschdetektor 28, 29 am Ausgang 6 des Kompanders 5. Die Abzweigung kann jedoch auch gemäß Fig. 10 zwischen Mikrophon 3 und dem Eingang 4 des Kompanders 5 erfolgen.

Anstelle von Analogbausteinen können Digitalbausteine verwendet und die Pegel in Digitalsignale umgesetzt und die zu ermittelnden Werte zur Kennlinienverschiebung berechnet werden. Hierzu kann ein digitaler Signalprozessor dienen, in dessen zugeordnetem Speicher die Kennlinienform als digitale Worte, z.B. in 16-Bit-Breite, etc., abgelegt ist. In Fig. 10 bedeuten $y(k)$ die Abtastwerte des Mikrophonsignals U1, wobei k die Abtastzeitpunkte sind. $\bar{y}_s$ ist der aus dem Kurzzeit-Durchschnittswert des Sendesignals U1 oder U2 gebildete digitale Steuerwert zur Berechnung des Verstärkungsfaktors. Er kann nach folgender Formel berechnet werden, wobei $a_r$ der Koeffizient für die Zeitkonstante für ansteigende Pegel und $a_f$ für fallende Pegel bedeutet; und zwar für steigende Pegel:

$$\bar{y}_s(k) = (1 - a_r) | y(k) | + a_r \bar{y}_s(k - 1),$$

wenn der Betrag des momentanen Sendesignals $| y(k) |$ größer ist als der vorherige Wert $\bar{y}_s(k - 1)$, und für fallende Pegel:

$$\bar{y}_s(k) = (1 - a_f) | y(k) | + a_f \bar{y}_s(k - 1),$$

wenn der Betrag des momentanen Sendesignals $| y(k) |$ kleiner oder gleich dem vorher berechneten Wert, $\bar{y}_s(k - 1)$ ist.

Diese Formeln beschreiben im Prinzip ein Rekursiv-Filter erster Ordnung. Durch das Verhältnis zwischen dem Betrag des Sendesignals $| y(k) |$ und dem vorher ermittelten Steuersignalwert $\bar{y}_s(k - 1)$, der als Kriterium für steigende und fallende Pegel dient und der bestimmt, welcher Parameter $a_i$ verwendet wird, beschreiben sie ein nichtlineares Filter. Diese Parameter $a_i$ bestimmen die Zeitkonstante des Schätzungsverfahrens und werden so gewählt, daß die Anstiegszeit der Flanke des Eingangspegels etwa 5 bis 20 mal kürzer ist als die fallende Flanke.

Dieser Schätzwert $\bar{y}_s(k)$ bildet die Grundlage zur Berechnung des Verstärkungsfaktors $g(\bar{y}_s)$. Diese Berechnung ist jedoch noch abhängig von der Lage des Einsatzpunktes p2 der Kompression, der anschließend als Schwellenwert $y_o$ bezeichnet wird. Weiterhin wird die Steilheit des Expansionsbereiches durch einen Faktor p bestimmt und die Expansionsbreite durch den Faktor w, woraus sich der Expansionshub ergibt. Unter Zugrundelegung dieser Faktoren können die einzelnen Bereich 25, 26, 27 der Kennlinie durch folgende Formeln beschrieben werden:

a) Bereich 25 bis zum Einsatzpunkt p1 der Expansion:

$$g(\bar{y}_s) = C_1,$$

wenn das Steuersignal $\bar{y}_s \leqq wy_o$
b) Expansionsbereich 26 von p1 bis p2 bzw. $y_o$:

$$g(\bar{y}_s) = C_2 \bar{y}_s{}^{p-1},$$

wenn $wy_o < \bar{y}_s \leqq \bar{y}_o$ ist und
c) Kompression ab p3 bzw. $y_o$:

$$g(\bar{y}_s) = C_{3/\bar{y}_s},$$

wenn $y_o < \bar{y}_s$ ist.

Beim Ausführungsbeispiel gemäß Fig. 10 erfolgt also die Berechnung des Kurzeitbetrag-Mittelwerts $\bar{y}_s$ des Sendesignals $y(k)$ gemäß den genannten Formeln. Dieser Wert von $\bar{y}_s$ wird mit dem vorhandenen Schwellenwert $y_o$ verglichen. Ist er kleiner als dieser, so wird daraus geschlossen, daß es sich nicht um Sprachsignale handelt. Dementsprechend erfolgt in diesem Fall die Berechnung des Langzeitterms des Geräuschanteils $\bar{y}_{ln}$, der mit dem Gewichtungsfaktor $w_n(k)$ multipliziert wird und zur Auswertung zur Verfügung gehalten wird.

Ist der Mittelwert des Kurzzeitterms $\bar{y}_s$ größer als der Schwellenwert $y_o$, dann wird der Mittelwert des Langzeitterms des Sprachanteils $\bar{y}_{ls}$ berechnet, gegebenenfalls mit einem Gewichtungsfaktor $w_s(k)$ multipliziert und zu dem Langzeitterm $\bar{y}_{ln}$ des Geräuschanteils addiert. Der berechnete Wert ist der neue Sollwert zur Berechnung des Schwellenwertes $y_o$. Dieser wird mit einem vom Empfangssignal $x(k)$ abgeleiteten berechneten Mittelwert des mit einem Lautsprecher-Mikrophon-Kopplungsfaktor $C_{lm}$ multiplizierten Kurzzeitterms $\bar{X}_s$ des Empfangssignals $x(k)$ verglichen. Ist der berechnete Wert für den Sollwert von $y_o$ größer, dann erfolgt die Berechnung desselben. Der erhaltene Wert $y_o$ wird zusammen mit dem berechneten Wert $\bar{y}_s$ zur Berechnung des Verstärkungsfaktors $g(\bar{y}_s)$ verwendet und damit dann die Berechnung der neuen Kennlinie durchgeführt.

Die Fig. 11 zeigt diese Beziehung zwischen Eingangs-Sendesignal $\bar{y}_s$ (U1 der Fig. 1, 2 und 9) und der Verstärkung $g(\bar{y}_s)$, die dem Verhältnis zwischen Eingangs- und Ausgangssignal des Übertragungszweiges entspricht. Der Schwellenwert $y_o$ bzw. der Punkt p2 ist so zu wählen, daß der Geräuschpegel den Expansionsbereich 26 nicht erreicht. Es muß daher noch eine Adaption an die Umgebungsgeräusche erfolgen. Hierzu werden die Durchschnittswerte der Langzeit-Terme des Sprachsignals, $\overline{y}_{ls}$, und des Geräuschsignals, $\overline{y}_{ln}$, benötigt, die nach folgenden Formeln berechenbar sind:

$$\overline{y}_{ln}(k) = (1 - a_l) \, | \, y(k) \, | \, + \, a_l \, \overline{y}_{ln}(k - 1),$$

wenn $\overline{y}_s(k) \leq y_o(k)$ ist,

$$\overline{y}_{ln}(k) = \overline{y}_{ln}(k - 1),$$

wenn $\overline{y}_s(k) > y_o(k)$ ist,
und

$$\overline{y}_{ls}(k) = \overline{y}_{ls}(k - 1),$$

wenn $\overline{y}_s(k) \leq y_o(k)$ ist
und

$$\overline{y}_{ls}(k) = (1 - a_l) \, | \, y(k) \, | \, + \, a_l \overline{y}_{ls}(k - 1),$$

wenn $\overline{y}_s(k) > y_o(k)$ ist,
wobei der Index l den Langzeitterm, der Index ln den Langzeitterm des Geräusches und der Index ls denjenigen der Sprache, $a_l$ die jeweilige Koeffizienten der Zeitkonstante, die hier wesentlich größer gewählt sind als diejenigen, die zur Berechnung des Steuersignals $y_s(k)$ verwendet werden. Daher ist das Verhältnis zwischen dem Steuersignal $y_s(k)$ und dem Schwellenwert $y_o$ ein einfaches Kriterium zur Spracherkennung und zur Berechnung der Lage des Schwellenwertes $y_o$. Dies geschieht entsprechend der Formel:

$$y_o(k + 1) = w_n(k) \, \overline{y}_{ln} + (k) \, w_s(k) \, \overline{y}_{ls}(k),$$

wobei $w_n(k)$ und $w_s(k)$ die
jeweilige Gewichtung der Langzeit-Geräusch- und der Langzeit-Sprach-Terme.

Durch diese Algorithmen ist ein einwandfreies Freisprechen z.B. bei einem Telefon möglich, da die Sprachqualität und die Stabilität des Systems in einfacher Weise verbessert und die Schallpegel erhöht werden können, ohne die Verstärkung manuell steuern zu müssen. Die Algorithmen sind auch geeignet, die Umgebungsparameter an eine Systemänderung anzupassen. Sie können auch zusammen mit anderen Algorithmen zur Echobeseitigung statt einer Dämpfung derselben verwendet werden.

Mit der Erfindung kann daher sowohl bei Anwendung von analogen als auch bei digitalen Systemen die Kompanderkennlinie und die Empfangslautstärke in Abhängigkeit von der Besprechungslautstärke und von Umgebungsgeräuschen immer automatisch eingestellt und somit der akustischen Situation angepaßt werden. Dabei wird bei höheren Geräuschpegeln auch die Empfangslautstärke angehoben. Mit steigender Steuerspannung U6 wird die maximale Empfindlichkeit durch Kennlinienverschiebung (Verschiebung von p3 bzw. $y_o$ nach rechts) abgesenkt. Gleichzeitig können durch den mitverschobenen Expanderbereich auch größere Geräuschpegel weiterhin abgeschwächt werden, wogegen die Wiedergabelautstärke umgekehrt proportional verändert, also angehoben und Sprachsignale nach wie vor durch die Kompression mit konstantem Pegel gesendet werden. Weiterhin kann der Hub der Expansion verkleinert werden, wenn der Abstand zwischen Sprachpegel und Geräuschpegel kleiner wird, wie anhand der Kennlinie 24.1 in Fig. 1, 2 und 6 beispielhaft dargestellt. Dabei bleibt die ständige Anpassung der Wiedergabelautstärke an die Erfordernisse erhalten.

**Patentansprüche**

1. Verfahren zum Verbessern der Übertragungseigenschaften einer mit einer adaptiven Dynamiksteuerung versehenen elektroakustischen Anlage, die einen Sendezweig mit wenigstens einem Mikrophon und einem Sendeverstärker und einen Empfangszweig mit einem Empfangsverstärker und wenigstens einem Lautsprecher sowie zur adaptiven Dynamiksteuerung einen Kompander aufweist, dessen Einsatzpunkte der Kompression und Expansion in Abhängigkeit von Sende-, Empfangs-, Echo- und Geräuschsignalen dadurch veränderbar sind, daß diese Signale festgestellt und entsprechend deren Pegel Steuersignale erzeugt und zur Kompandersteuerung durch Kennlinienänderung und/oder -verschiebung verwendet werden, insbesondere zum Verbessern der Freisprecheigenschaften eines Telekommunikations-Endgerätes,
   **dadurch gekennzeichnet,** daß
   - das Sendesignal (U1 und/oder U2) des Sendezweiges (2) einem Sprachdetektor (28) zugeführt wird, der im Sprachfrequenzbereich den Spitzenwert ($L_{ss}$) des Sendesignales (U1; U2) erkennt, daß ein dem Spitzenwert ($L_{ss}$) entsprechender Sprachpegel ermittelt und ein diesem entsprechendes, zur Steuerung der Kennlinie (LU2 = f(LU1)) dienendes Sprachpegel-Steuersignale (USp) erzeugt oder berechnet wird,
   - daß das Sendesignal (U1; U2) gleichzeitig einem Geräuschdetektor (29) zugeführt und der Geräuschpegel festgestellt wird und ein diesem Geräuschpegel entsprechendes, zur Steuerung der Kennlinie (LU2 = f(LU1)) dienendes Geräuschpegel-Steuersignal (UG) erzeugt oder berechnet wird und

- daß durch Addition des Sprechpegel-Steuersignals (USp) und des Geräuschpegel-Steuersignals (UG) die Lage der Kennlinie (LU2 = f(LU1)) derart festgelegt wird, daß der ermittelte Sprachpegel im Kompressionsbereich (p2 - p3) und der ermittelte Geräuschpegel unterhalb des Expansionsbereiches (p1-p2) liegt.

2. Verfahren nach Anspruch 1, dadurch gekennzeichnet, daß das Empfangssignal (U10) des Empfangszweiges (22) insbesondere nach dem Lautstärkesteller (17) einem Schwellenwertdetektor (36) zugeführt, der Empfangspegel (|U12|) ermittelt und ein Empfangspegel-Steuersignal (UE) generiert wird, wenn der Empfangspegel (|U12|) gleich oder größer ist als der Schwellenwert (x), daß mit dem Empfangspegel-Steuersignal (UE) eine Steuereinheit (35) angesteuert wird, über die die Kompandersteuerung unterbrochen und der zuletzt vorhandene, die Kompandersteuerung bewirkende Pegel des Steuersignals (U6) gespeichert und die Kompandersteuerung während der Dauer des Empfangspegel-Steuersignals (UE) in Abhängigkeit von dem gespeicherten Steuersignal (U6) durchgeführt wird, und daß bei nicht vorhandenem Empfangspegel-Steuersignal (UE) die Kompandersteuerung wieder zugeschaltet wird.

3. Verfahren nach Anspruch 1, dadurch gekennzeichnet, daß mit zunehmendem Geräuschpegel und/oder mit abnehmendem Abstand zwischen Sprachpegel und Geräuschpegel der Hub des Expansionsbereiches (26) verringert wird und umgekehrt, indem entweder mit Änderung des ermittelten Geräuschpegels und/oder des ermittelten Abstands zwischen Sprach- und Geräuschpegel ein den Expansionshub des Kompanders (5) steuerndes Steuersignal erzeugt und dem Expansionszweig des Kompanders aufgeschaltet wird.

4. Verfahren nach Anspruch 1 und 2, dadurch gekennzeichnet, daß die die Kennlinie (LU2 = f(LU1)) des Kompanders (5) bestimmenden Komponenten derart gewählt werden, daß zunächst die Grundeinstellung der Kennlinie entsprechend einer durchschnittlichen, akustischen Umgebung erfolgt, daß anschließend festgestellt wird, ob ein Empfangssignal (U12) vorhanden ist, das größer ist als der vorgegebene Empfangspegel-Schwellenwert (x), daß bei Vorhandensein eines über dem Schwellenwert (x) liegenden Empfangssignals eine Rückhördämpfungs-Auswertung und über diese eine Kennliniensteuerung erfolgt und bei nicht vorhandenem oder zu kleinem Empfangssignal (U12) festgestellt wird, ob im Sendesignal (U1; U2) ein Burst auftritt, daß bei vorhandenem Burst der Pegel des Spitzenwertes (Lss) ermittelt, mit einem ersten Gewichtungsfaktor (k1) multipliziert und so die Lage des den Einsatzpunkt (p2) oder den Bereich (p2 - p3) der Kompression bestimmenden Pegels (Up2; Up2-p3) der Kennlinie ermittelt oder berechnet wird, und bei nicht vorhandenem Burst der Geräuschpegel ermittelt und festgestellt wird, ob er größer oder kleiner ist als der Pegel des Einsatzpunktes (p1) der Expansion, daß bei kleinerem Pegel die Geräuschpegelermittlung wiederholt wird und bei größerem Pegel dieser mit einem zweiten Gewichtungsfaktor (k2) multipliziert und so die Lage des den Einsatzpunkt (p1) der Expansion bestimmenden Pegels (Up1) ermittelt oder berechnet wird, daß dann aus der Summe der gewichteten Pegel (Up1 und Up2 bzw. Up1 und Up2-p3) das zur Kennliniensteuerung dienende Steuersignal (U6) generiert oder berechnet wird und mit diesem die Kennlinienverschiebung durchgeführt wird.

5. Verfahren nach Anspruch 4, dadurch gekennzeichnet, daß für die Erzeugung der Zeitkonstanten des Sprachdetektors (28) und des Geräuschdetektors (29) jeweils ein Integrierglied (48, 49) aus einem Kondensator (C), einem Widerstand ($R_x$) mit einer mit diesem in Reihe geschalteten Diode (D) und einem Widerstand ($R_y$) verwendet wird, wobei folgende Bedingung für die Zeitfunktion F (t) erfüllt wird:

6. Verfahren nach Anspruch 4, dadurch gekennzeichnet, daß zur Ermittlung oder Berechnung der Lage des Einsatzpunktes (p2) oder des Bereiches (p2 - p3) der Kompression die Zeitkonstanten des Sprachfilters (40) und des Geräuschfilters (42) jeweils aus dem Momentanwert des Steuersignals (U6 . 1/(a + 1)) und dem zuvor ermittelten Wert (U6 * . a) desselben ein gemittelter Wert generiert oder berechnet und zur Kompandersteuerung zur Verfügung gestellt wird, wobei zur Berechnung der Zeitkonstanten des Sprachfilters (40) und des Geräuschfilters (42) jeweils zueinander umgekehrt proportionale Werte für den Faktor a verwendet werden.

7. Verfahren nach Anspruch 1, dadurch gekennzeichnet, daß das vom Sprachdetektor (28) auszugebende Steuersignal ($y_s$) aus dem Sendesignal (y(k)) für steigende Pegel nach der Formel

$$\overline{y}_s\,(k) = (1 - a_r)\,|\,y\,(k)\,|\, + \,a_r\overline{y}_s\,(k - 1),$$

d.h. für den Fall, daß $| \, y \, (k) \, | > \bar{y}_s \, (k - 1)$ ist und für fallende Pegel nach der Formel

$$\bar{y}_s \, (k) = (1 - a_f) \, | \, y \, (k) \, | + a_f \bar{y}_s \, (k - 1),$$

d.h. für den Fall, daß $| \, y \, (k) \, | \leq \bar{y}_s \, (k - 1)$ ist, berechnet wird, wobei $a_i$ die Parameter für die Zeitkonstanten des Sprachfilters sind und $a_r$ die Zeitkonstante für steigende Pegel und $a_f$ diejenige für fallende Pegel festlegt und die Zeitkonstanten $a_r$ und $a_f$ so gewählt sind, daß die Anstiegszeit der Anstiegsflanke etwa 5 bis 20 mal, insbesondere 10 mal kürzer ist als die der abfallenden Flanke und daß mit dem so erhaltenen Steuersignal ($y_s(k)$) der Verstärkungsfaktor (g ($y_s$)) des Kompanders (5) nach folgenden Formeln berechnet wird:

$$g \, (\bar{y}_s) = C_1,$$

wenn $\bar{y}_s \leq \omega y_o,$

$$g \, (\bar{y}_s) = C_2 \, \bar{y}_s{}^{p-1},$$

wenn $\omega y_0 < \bar{y}_s \leq y_o$ und

$$g \, (\bar{y}_s) = C_3 \, \bar{y}_s,$$

wenn $y_o < \bar{y}_s$ ist.

8. Verfahren nach Anspruch 7, dadurch gekennzeichnet, daß der Schwellenwert (yo), also der Einsatzpunkt (p2) der Kompression berechnet wird gemäß der Formel

$$y_o \, (k + 1) = w_n \, (k) \, y_{ln} \, (k) + w_s \, (k) \, y_{ls} \, (k),$$

wobei $w_n \, (k)$ und $w_s \, (k)$ Gewichtungsfaktoren und der Index n = Geräuschanteil, der Index s = Sprachanteil, der Index ln = Langzeitzeit-Term des Geräuschsignals und Index ls = Langzeit-Term des Sprachsignals bedeutet und letztere gemäß den folgenden Formeln berechnet werden:

$$\bar{y}_{ln} \, (k) = (1 - a_l) \, | \, y(k) \, | + a_l \, \bar{y}_{ln} \, (k - 1),$$

wenn $\bar{y}_s(k) \leq y_o \, (k)$ ist,

$$\bar{y}_{ln} \, (k) = + \, y_{ln} \, (k - 1),$$

wenn $\bar{y}_s \, (k) > y_o \, (k)$ ist, und

$$\bar{y}_{ls} \, (k) = \bar{y}_{ls} \, (k - 1),$$

wenn $\bar{y}_s \, (k) \leq y_o \, (k)$ ist

und

$$\bar{y}_{ls} \, (k) = (1 - a_l) \, | \, y \, (k) \, | + a_l \bar{y}_{ls} \, (k - 1),$$

wenn $\bar{y}_s \, (k) > y_o \, (k)$ ist.

9. Verfahren nach einem der Ansprüche 1 bis 8, dadurch gekennzeichnet, daß der Kompander durch einen digitalen Signalprozessor realisiert wird, daß die analogen Sende- und Empfangssignale (U1 und U10 bzw. U12) digitalisiert werden, daß in einem Speicher der Kennlinienverlauf in digitaler Form abgespeichert wird und entsprechend der aus den einzelnen Steuergrößen berechneten digitalen Steuersignale verschoben und/oder verändert wird und die so modifizierte Kennlinie zur Kompandersteuerung verwendet wird.

FIG.1

FIG. 2

FIG.3

EP 0 600 164 A1

FIG.4

12

FIG.5

FIG.6

FIG. 7

FIG. 8

FIG.9

EP 0 600 164 A1

**FIG. 10**

**FIG. 11**

Europäisches
Patentamt

**EUROPÄISCHER RECHERCHENBERICHT**

Nummer der Anmeldung

| | **EINSCHLÄGIGE DOKUMENTE** | | EP 93113875.4 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
| A | <u>DE - A - 3 822 353</u><br>(SIEMENS)<br> * Gesamt *<br>-- | 1 | H 04 R 3/02 |
| A | <u>EP - A - 0 467 499</u><br>(PIONEER)<br> * Zusammenfassung; Spalte 1, Zeile 1 - Spalte 2, Zeile 8; Fig. 4; Anspruch 1 *<br>-- | 1 | |
| A | <u>EP - A - 0 280 907</u><br>(SIEMENS)<br> * Zusammenfassung; Spalte 1, Zeile 1 - Spalte 2, Zeile 32; Fig. 1; Anspruch 1 *<br>---- | 1 | |

| | RECHERCHIERTE SACHGEBIETE (Int Cl⁵) |
|---|---|
| | H 04 R |

Der vorliegende Recherchenbericht wurde für alle Patentansprüche erstellt.

| Recherchenort | Abschlußdatum der Recherche | Prüfer |
|---|---|---|
| WIEN | 10-11-1993 | GRÖSSING |